# EUROPEAN PATENT SPECIFICATION

(11) **EP 1 077 595 B1**
(45) Date of publication and mention of the grant of the patent: **17.09.2003**
(21) Application number: 00909793.2
(22) Date of filing: 07.03.2000
(51) Int. Cl.: A01D 78/10

(54) **A HAYMAKING MACHINE**
HEUWERBUNGSMASCHINE
RATEAU MECANIQUE

(30) Priority: 09.03.1999 NL 1011500; 07.05.1999 NL 1011989
(43) Date of publication of application: 28.02.2001
(73) Proprietor: MAASLAND N.V., 3155 PD Maasland (NL)
(72) Inventor: GEERTS, Cornelis, Franciscus, Johannes, NL-4926 RJ LAGE ZWALUWE (NL)
(74) Representative: Corten, Maurice Jean F.M.
(86) International application number: NL0000148
(87) International publication number: WO00062595

(56) References cited:
- EP-A- 0 381 970
- WO-A-96/15657
- DE-A- 4 340 384
- DE-A- 19 736 460
- DE-U- 9 015 320
- DE-U- 9 114 316

## Description

The invention relates to a haymaking machine according to the preamble of claim 1.

Such a haymaking machine is known from WO 96/15657.

It is an objective of the invention to provide a compact haymaking machine in which crop working members with large dimensions can be used. According to the invention this is achieved by the features mentioned in the characterizing part of claim 1. In the transport position the crop working members assume a lower position relative to the connecting element than in the situation when they have been pivoted up from their smallest operative position.

From DE-U-9015320 a haymaking machine is known in which the connecting element itself can be bent downwards to reduce the overall height of the machine during transport.

The invention will now be explained in further detail with reference to the accompanying drawings.
Figure 1 is a schematic plan view of a haymaking machine according to the invention;
Figure 2 is a schematic rear view in the direction of the arrow II in Figure 1;
Figure 3 is a schematic plan view in the direction of the arrow III in Figure 2;
Figure 4 is a schematic cross-section according to the arrows IV-IV in Figure 3, and
Figure 5 is a schematic perspective view of a stop mechanism according to a further embodiment of the invention.

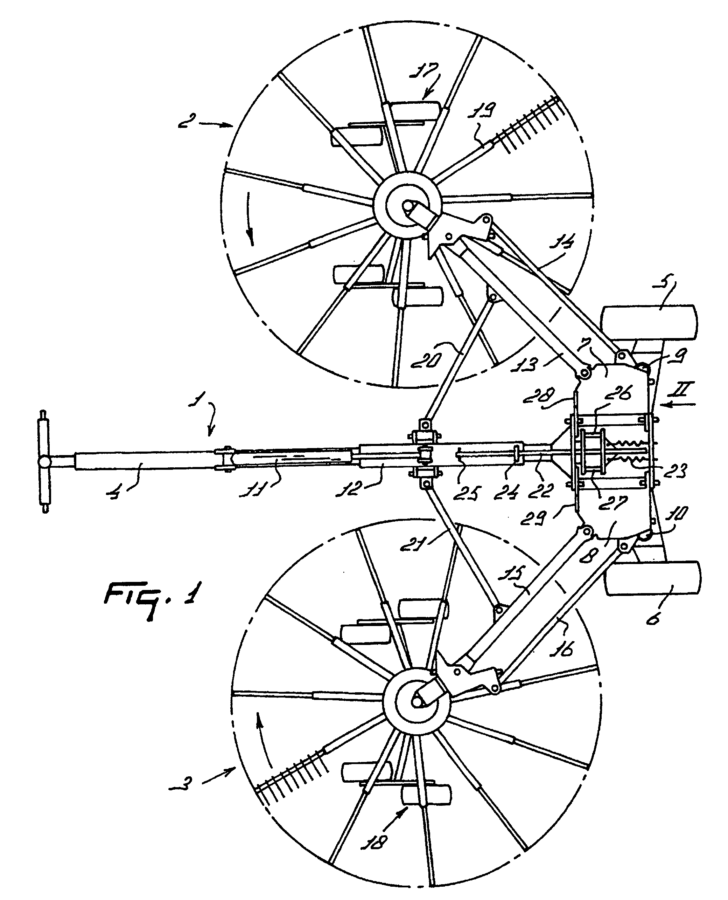

Figure 1 is a schematic plan view of a haymaking machine according to the invention. The machine comprises a connecting element 1, which can be fastened to a tractor, on both sides of which connecting element 1 there is disposed a crop working member 2, 3. The connecting element 1 is substantially designed as a beam 4 extending in the direction of travel and provided with a support and wheels 5, 6. In the embodiment shown the crop working members 2, 3 are rake members known per se, which are drivable and rotatable about a substantially upwardly directed axis.

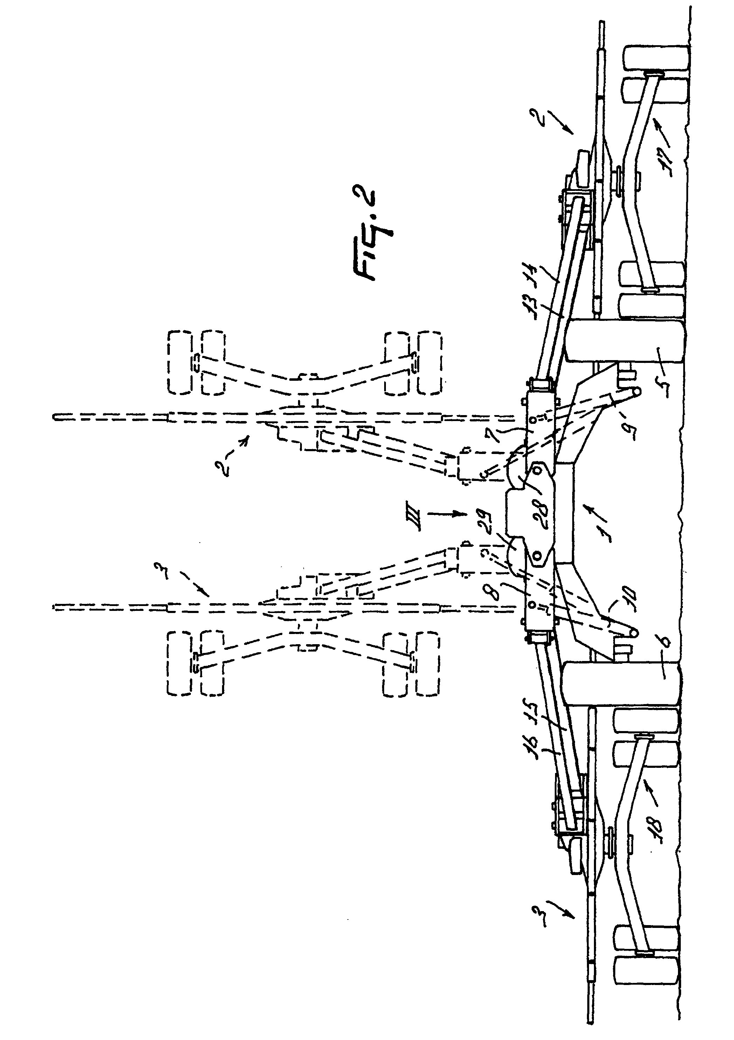

The distance from the rake members 2, 3 to a central axis extending in the direction of travel of the tractor is adjustable, so that the working width of the rake machine can be adjusted, as will be explained hereinafter in further detail. On both sides of the rear side of the beam 4 there are disposed intermediate elements 7, 8 which are capable of hinging about a substantially horizontal axis extending in the direction of travel. Said intermediate elements 7, 8 are each pivotable by means of a control cylinder 9, 10 (see also Figure 2). The rake members 2, 3 are fastened themselves to the intermediate elements 7, 8 and consequently pivotably connected with the beam 4 so as to be capable of being pivoted up from an operative position for transport purposes and vice versa.

The machine is provided with a slide 12, which is movable along the beam 4 by means of a further control cylinder 11 and which is connected with the crop working members 2, 3. Via a parallelogram construction having two parallel bars 13, 14; 15, 16 respectively, each intermediate element 7, 8 is connected with the corresponding rake member 2, 3 in such a manner that the orientation of the rake member 2, 3 in the direction of travel is equal in any position. This has not only the advantage that the rake member 2, 3 can be provided with a tandem wheel construction 17, 18 known per se, but also that the tine arms 19 can be accurately controlled in any operative position by means of one single curved path.

The bars 13, 14; 15, 16 are fastened with one end, hinged about an axis which is substantially vertical in the operative position, to the intermediate element 7, 8. With their other end they are fastened, hinged about an axis which is also substantially vertical in the operative position, to the rake member 2, 3.

Via bars 20, 21 the slide (or sliding yoke) 12 is connected with each of the rake members 2, 3. These bars 20, 21 are each fastened with one end, hinged about a substantially horizontal axis and about an axis which is substantially vertical in the operative position, to the slide 12 and with their other end, hinged about an axis which is substantially vertical in the operative position, with the corresponding bar 13, 15 of the intermediate element 7, 8.

Accordingly, by means of the control cylinder 11 the slide 12 can be moved along the beam 4, so that the distance from the rake members 2, 3 to the central axis of the machine can be adjusted. By means of the control cylinders 9, 10 the rake members 2, 3 can be pivoted up.

The beam 4 and the slide 12 are provided with stop means for limiting their mutual relative movement. As will be explained hereinafter in further detail, these stop means are designed such that the slide 12, from a first end position (in Figure 1: to the right) corresponding to that operative position in which the distance from the rake members 2, 3 to the central axis is maximal (i.e. the maximum working width), is not further movable than into an intermediate position corresponding to that operative position in which the distance from the rake members 2, 3 to the central axis is minimal (i.e. the minimum working width), unless the rake members 2, 3 have been pivoted up completely, in which case the slide 12 is further movable into a second end position (in Figure 1: to the left) corresponding to the transport position of the rake members 2, 3.

The stop means comprise a stop bar 22, one end of which is connected with the beam 4 via a spring construction 23 and whose other end is passed through a ring 24 on the slide 12 and is provided with a stop 25 for said ring 24, while one end is further provided on both sides with a stop pin 26; 27 which is suitable for co-operating with a stop board 28; 29 that is connected with a pivotable intermediate element 7; 8.

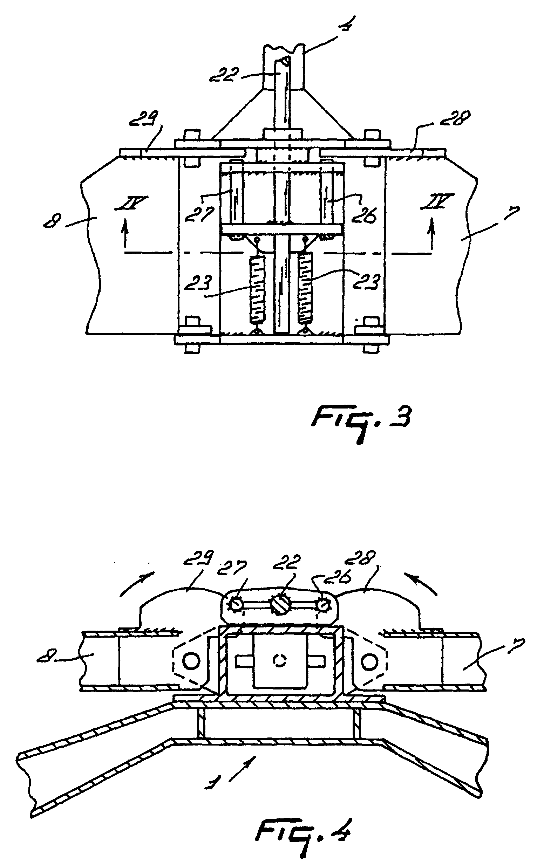

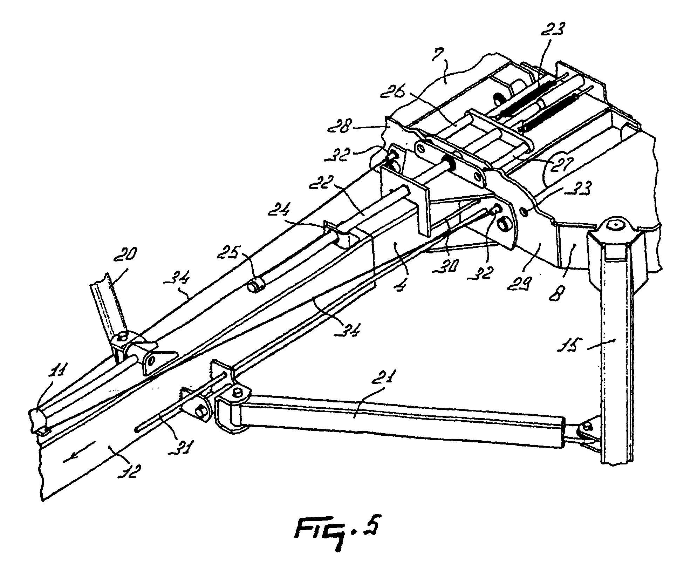

As also explained in further detail with reference to Figures 3 and 4, the stop boards 28, 29 and the stop pins 26, 27 are designed such that each stop board 28; 29 blocks the corresponding stop pin 26; 27 and along therewith the stop bar 22, unless the rake members 2; 3 have been pivoted up completely, in which case the stop pins 26; 27 are movable with the aid of the stop bar 22 against spring action along or through the stop boards 28; 29, so that the rake members 2; 3 attain their transport position. Via the stop bar 22 the slide 12 draws the stop pins 26, 27 against the stop boards 28, 29. When the rake members 2, 3 have been pivoted up completely, the intermediate elements 7, 8 with the stop boards 28, 29 have also been pivoted up. In said position the stop pins 26, 27 are capable of sliding along the corresponding stop boards 28, 29, so that it is possible for the slide 12 to draw the stop bar 22 further to the left against spring action. As a result thereof the rake members 2, 3 attain their low transport position.

Furthermore, the stop boards 28, 29 and the stop pins 26, 27 are designed such that in the transport position of the rake members 2; 3 each stop pin 26; 27 blocks the corresponding stop board 28; 29, so that the intermediate elements 7; 8 and along therewith the rake members 2; 3 cannot pivot downwards. The fact is that, when the stop pins 26; 27 slide along the stop boards 28, 29, said stop boards 28, 29 are no longer able to pivot downwards. In this manner the stop pins 26, 27 and the stop boards 28, 29 constitute blocking means ensuring that the rake members 2, 3 cannot be pivoted downwards directly from the transport position.

Accordingly, the machine is designed such that the completely pivoted up crop working members 2, 3 are able to perform a movement having a downward component relative to the beam 4, as a result of which the crop working members 2, 3 can be brought into a transport position in which they assume a lower position than in the situation when they have been pivoted up from that operative position in which their distance to the central axis is minimal.

Figure 2 shows, as a further illustration, a schematic rear view in the direction of the arrow II in Figure 1. The transport position of the rake members 2, 3 is indicated by means of broken lines.

Figure 3 is a schematic plan view in the direction of the arrow III in Figure 2. The intermediate elements 7, 8 have been pivoted downwards and the stop boards 28, 29 are blocking the stop pins 26, 27.

Figure 4 is a schematic cross-section according to the arrows IV-IV in Figure 3. Also in Figure 4, the intermediate elements 7, 8 have been pivoted downwards and the stop boards 28, 29 are blocking the stop pins 26, 27. By means of arrows there is indicated how the intermediate elements 7, 8 can be pivoted upwards. Then, the stop pins 26, 27 can be moved beyond the stop boards 28, 29.

Figure 5 is a schematic perspective view of a further stop mechanism. In this situation the stop means 22 - 34 are designed such that the slide 12, from a first end position corresponding to that operative position in which the distance from the rake members 2, 3 to the central axis is maximal, is not further movable than into an intermediate position corresponding to that operative position in which the distance from the rake members 2, 3 to the central axis is minimal, unless the rake members 2, 3 have been pivoted up through a specific angle α, in which case the slide 12 is further movable into a second end position, which corresponds, after the rake members 2, 3 have further been pivoted up completely, to the transport position of the rake members 2, 3.

To that end, the elements 22 to 27 are designed in the same manner as described in the foregoing with reference to the previous embodiment. The stop boards 28, 29 are blocking again the stop pins 26, 27, but this time only until the rake members 2, 3 have been pivoted up through an angle α of e.g. approximately 35 degrees. Then the stop pins 26, 27 move (through or) along the stop boards 28, 29, so that the slide 12 can move entirely to the left. Furthermore, from any operative position, the rake members 2, 3 cannot be pivoted up further than through the angle α. For that purpose, there are provided pins 30 connected with the stop bar 22 which, after having pivoted through the angle α, block the lower side of the stop boards 28, 29. When the slide 12 moves entirely to the left (into the second end position), the stop bar 22 with the pins 30 is taken along, so that the stop boards 28, 29 are capable of pivoting further and the rake members 2, 3 can be pivoted up completely.

A stop 31, blocking the folded up end of the bar 21 at the side of the beam 4, then ensures that the slide 12 is no longer capable of moving to the right. Furthermore, pins 32 move under spring pressure into apertures 33 of the stop boards 28, 29, so that the completely pivoted up rake members 2, 3 are not capable of pivoting down in sideward direction. Now the machine has attained the transport position and is locked.

For unlocking the machine, the pins 32 are connected via cables or bars 34 with the housing of the control cylinder 11, said housing being fitted in a slotted hole. When activating the control cylinder 11, because of the fact that the stop 31 is blocking the slide 12, the housing will move to the left in the slotted hole and will consequently pull the pins 32 out of the apertures 33. As a result thereof the rake members 2, 3 are again capable of pivoting downwards until they have attained the angle α. Then the stop pins 26, 27 will block the stop boards 28, 29 and the members 2, 3 are not capable of moving further downwards. Only now the slide 12 can again move beyond the stop 31, so that the spring construction 23 can again pull the stop pins 26, 27 to the right, thus enabling the stop boards 28, 29 to pivot further downwards. As a result thereof the rake members 2, 3 are again capable of moving downwards into an operative position. Also the pins 30 become active again.

In this manner the members 2, 3 of the machine can be folded up from any operative position maximally through the angle α. In that situation the slide has to be moved entirely to the left, so that the machine attains its smallest position. Then, the members 2, 3 can further be folded up completely, so that the machine attains the extremely low, compact transport position in which the members 2, 3 are moreover locked in a reliable manner. A major advantage of this embodiment is that the machine will not attain a high position, not even during being folded up.

Accordingly, the machine is designed such that the rake members 2, 3, when they are in a position that can be attained by pivoting up (partially or completely) from their smallest operative position, are capable of performing a movement having a component in the direction of the beam 4. As a result thereof the members 2, 3 can be brought into a transport position in which they assume a lower position than in the situation when they have been pivoted up from their smallest operative position.

## Claims

1. A haymaking machine provided, on both sides of a connecting element (1), which can be fastened to a tractor, with a crop working member (2, 3) which is drivable and rotatable about a substantially upwardly directed axis and whose distance to a central axis extending in the direction of travel of the tractor is adjustable from a first operative position in which the distance from the crop working member to the central axis is maximal to an intermediate operative position in which the distance from the crop working member to the central axis is minimal, said crop working member (2, 3) being pivotably fastened to the connecting element (1) so as to be capable of being pivoted up from the intermediate operative position for transport purposes and vice versa, **characterized in that** means (7 - 16, 20 - 34) are provided for making the crop working members (2, 3), when the latter are in the pivoted up position, perform a movement having a component in the direction of the connecting element (1) for moving the crop working members (2, 3) downwards relative to the connecting element (1) into a transport position in which they assume a lower position than in the pivoted up position from the intermediate operative position.

2. A machine as claimed in claim 1, **characterized in that** the machine is provided with blocking means (26 - 29, 31 - 34) ensuring that the crop working members (2, 3) cannot be pivoted downwards directly from the transport position.

3. A machine as claimed in any one of claims 1 or 2, **characterized in that** the connecting element (1) is designed as a beam (4) extending in the direction of travel, said beam (4) being provided on both sides in a hinged manner with an intermediate element (7; 8) which is pivotable by means of a control cylinder (9; 10) and to which the crop working member (2; 3) is fastened.

4. A machine as claimed in any one of claims 1 to 3, **characterized in that** the connecting element (1) is provided with wheels (5, 6).

5. A machine as claimed in any one of claims 3 and 4, **characterized in that** the machine is provided with a slide (12) which is movable along the beam (4) by means of a control cylinder (11) and which is connected with the crop working members (2, 3).

6. A machine as claimed in any one of claims 3 to 5, **characterized in that** the intermediate element (7; 8) is connected with the corresponding crop working member (2; 3) via at least one bar (13; 15) which is fastened with one end, hinged about an axis which is substantially vertical in the operative position, to the intermediate element (7; 8).

7. A machine as claimed in claim 6, **characterized in that** the slide (12) is connected with each of the crop working members (2, 3) via bars (20, 21) which are each fastened with one end, hinged about a substantially horizontal axis and about an axis which is substantially vertical in the operative position, to the slide (12) and with their other end, hinged about an axis which is substantially vertical in the operative position, with the corresponding bar (13, 15) of the intermediate element (7, 8).

8. A machine as claimed in any one of claims 3 to 7, **characterized in that** the intermediate element (7, 8) is connected with the corresponding crop working member (2; 3) via a parallelogram construction having two parallel bars (13, 14; 15, 16) in such a manner that the orientation of the crop working member (2; 3) in the direction of travel is equal in any position.

9. A machine as claimed in any one of claims 1 to 8, **characterized in that** each crop working member (2; 3) is provided with a tandem wheel construction (17; 18).

10. A machine as claimed in any one of claims 5 to 9, **characterized in that** the connecting element (1) and the slide (12) are provided with stop means (22 - 34) for limiting their mutual relative movement.

11. A machine as claimed in claim 10, **characterized in that** the stop means (22 to 29) are designed such that the slide (12), from a first end position corresponding to that operative position in which the distance from the crop working members (2, 3) to the central axis is maximal, is not further movable than into an intermediate position corresponding to that operative position in which the distance from the crop working members (2, 3) to the central axis is minimal, unless the crop working members (2, 3) have been pivoted up completely, in which case the slide (12) is further movable into a second end position corresponding to the transport position of the crop working members (2, 3).

12. A machine as claimed in claim 11, **characterized in that** the stop means (22 to 29) comprise a stop bar (22), one end of which is connected with the beam (4) via a spring construction (23) and whose other end is passed through a ring (24) on the slide (12) and is provided with a stop (25) for said ring (24), while one end is further provided on both sides with a stop pin (26; 27) which is suitable for co-operating with a stop board (28; 29) that is connected with a pivotable intermediate element (7; 8).

13. A machine as claimed in claim 12, **characterized in that** the stop boards (28, 29) and the stop pins (26, 27) are designed such that each stop board (28; 29) blocks the corresponding stop pin (26; 27) and along therewith the stop bar (22), unless the crop working members (2; 3) have been pivoted up completely, in which case the stop pins (26; 27) are movable with the aid of the stop bar (22) against spring action along or through the stop boards (28; 29), so that the crop working members (2; 3) attain their transport position.

14. A machine as claimed in claim 13, **characterized in that** the stop boards (28, 29) and the stop pins (26, 27) are designed such that, in the transport position of the crop working members (2, 3), each stop pin (26; 27) blocks the corresponding stop board (28; 29), so that the intermediate elements (7, 8) and along therewith the crop working members (2, 3) cannot pivot downwards.

15. A machine as claimed in claim 10, **characterized in that** the stop means (22 - 34) are designed such that the slide (12), from a first end position corresponding to that operative position in which the distance from the rake members (2, 3) to the central axis is maximal, is not further movable than into an intermediate position corresponding to that operative position in which the distance from the rake members (2, 3) to the central axis is minimal, unless the rake members (2, 3) have been pivoted up through a certain angle α, in which case the slide (12) is further movable into a second end position, which corresponds, after the rake members (2, 3) have further been pivoted up completely, to the transport position of the rake members (2, 3).

16. A machine as claimed in claim 15, **characterized in that** the stop means (22 - 34) are further designed such that the crop working members (2, 3) cannot be pivoted up from an operative position further than through the angle α, after which the slide (12) can be moved into the second end position, after which the crop working members (2, 3) can be pivoted up completely.

17. A machine as claimed in claim 16, **characterized in that** the stop means (22 - 34) are further designed such that the completely pivoted up crop working members (2, 3) are not capable of pivoting down in sideward direction.

## Patentansprüche

1. Heuwerbungsmaschine, die auf beiden Seiten eines Verbindungselements (1), das an einen Schlepper anschließbar ist, mit einem Gutbearbeitungsglied (2, 3) versehen ist, das antreibbar und um eine im wesentlichen aufwärts gerichtete Achse drehbar ist, und dessen Abstand zu einer sich in Arbeitsrichtung des Schleppers erstreckenden Mittelachse von einer ersten Arbeitslage, in welcher der Abstand des Gutbearbeitungsgliedes zur Mittelachse am größten ist, in eine Zwischenarbeitslage einstellbar ist, in welcher der Abstand des Gutbearbeitungsgliedes zur Mittelachse am kleinsten ist, wobei das Gutbearbeitungsglied (2, 3) an dem Verbindungselement (1) schwenkbar angeordnet ist, so daß es zu Transportzwecken aus der Zwischenarbeitslage nach oben und zurück geschwenkt werden kann,
**dadurch gekennzeichnet, daß** Vorrichtungen (7 bis 16, 20 bis 34) vorhanden sind, die bewirken, daß die Gutbearbeitungsglieder (2, 3), wenn sich diese in der hochgeschwenkten Position befinden, eine Bewegung durchführen, die eine Komponente in Richtung des Verbindungselements (1) aufweist, um die Gutbearbeitungsglieder (2, 3) relativ zu dem Verbindungselement (1) nach unten in eine Transportlage zu bewegen, in der sie eine niedrigere Lage als in der aus der Zwischenarbeitslage hochgeschwenkten Position einnehmen.

2. Maschine nach Anspruch 1,
**dadurch gekennzeichnet, daß** die Maschine mit Sperrvorrichtungen (26 bis 29, 31 bis 34) versehen ist, die sicherstellen, daß die Gutbearbeitungsglieder (2, 3) aus der Transportlage nicht direkt nach unten geschwenkt werden können.

3. Maschine nach einem der Ansprüche 1 oder 2,
**dadurch gekennzeichnet, daß** das Verbindungselement (1) als sich in Arbeitsrichtung erstreckender Träger (4) ausgeführt ist, wobei der Träger (4) auf beiden Seiten gelenkig mit einem Zwischenelement (7; 8) verbunden ist, das mittels eines Steuerzylinders (9; 10) schwenkbar ist, und an dem das Gutbearbeitungsglied (2; 3) angebracht ist.

4. Maschine nach einem der Ansprüche 1 bis 3,
**dadurch gekennzeichnet, daß** das Verbindungselement (1) mit Rädern (5, 6) versehen ist.

5. Maschine nach einem der Ansprüche 3 und 4,
**dadurch gekennzeichnet, daß** die Maschine mit einem Schieber (12) versehen ist, der entlang des Trägers (4) mittels eines Steuerzylinders (11) bewegbar und mit den Gutbearbeitungsgliedern (2, 3) verbunden ist.

6. Maschine nach einem der Ansprüche 3 bis 5,
**dadurch gekennzeichnet, daß** das Zwischenelement (7; 8) mit dem entsprechenden Gutbearbeitungsglied (2; 3) durch mindestens eine Stange (13; 15) verbunden ist, die an einem Ende um eine in der Arbeitslage im wesentlichen vertikal ausgerichtete Achse schwenkbar mit dem Zwischenelement (7; 8) verbunden ist.

7. Maschine nach Anspruch 6,
**dadurch gekennzeichnet, daß** der Schieber (12) mit jedem der Gutbearbeitungsglieder (2, 3) durch Stangen (20, 21) verbunden ist, die jeweils an einem Ende um eine im wesentlichen horizontale Achse sowie um eine in der Arbeitslage im wesentlichen vertikale Achse schwenkbar mit dem Schieber (12) und am anderen Ende um eine in der Arbeitslage im wesentlichen vertikale Achse schwenkbar mit der entsprechenden Stange (13, 15) des Zwischenelements (7, 8) verbunden sind.

8. Maschine nach einem der Ansprüche 3 bis 7,
**dadurch gekennzeichnet, daß** das Zwischenelement (7, 8) mit dem entsprechenden Gutbearbeitungsglied (2; 3) durch eine Parallelogrammkonstruktion mit zwei parallelen Stangen (13, 14; 15, 16) in der Weise verbunden ist, daß die Ausrichtung des Gutbearbeitungsgliedes (2; 3) in Arbeitsrichtung in jeder Position gleich ist.

9. Maschine nach einem der Ansprüche 1 bis 8,
**dadurch gekennzeichnet, daß** jedes Gutbearbeitungsglied (2; 3) mit einer Doppelradkonstruktion (17; 18) versehen ist.

10. Maschine nach einem der Ansprüche 5 bis 9,
**dadurch gekennzeichnet, daß** das Verbindungselement (1) und der Schieber (12) mit Sperrvorrichtungen (22 bis 34) zur Begrenzung ihrer Bewegung relativ zueinander versehen sind.

11. Maschine nach Anspruch 10,
**dadurch gekennzeichnet, daß** die Sperrvorrichtungen (22 bis 29) derart ausgebildet sind, daß der Schieber (12) von einer ersten Endposition, die der Arbeitslage entspricht, in der der Abstand der Gutbearbeitungsglieder (2, 3) zur Mittelachse am größten ist, nicht weiter als bis in eine Zwischenposition bewegbar ist, die der Arbeitslage entspricht, in der der Abstand der Gutbearbeitungsglieder (2, 3) zur Mittelachse am kleinsten ist, es sei denn, die Gutbearbeitungsglieder (2, 3) wären vollständig hochgeschwenkt, in welchem Falle der Schieber (12) ferner in eine zweite Endposition bewegbar ist, die der Transportposition der Gutbearbeitungsglieder (2, 3) entspricht.

12. Maschine nach Anspruch 11,
**dadurch gekennzeichnet, daß** die Sperrvorrichtungen (22 bis 29) eine Sperrstange (22) umfassen, deren eines Ende über eine Federkonstruktion (23) mit dem Träger (4) verbunden ist und deren anderes Ende durch einen Ring (24) an dem Schieber (12) hindurchgeführt und mit einem Anschlag (25) für den Ring (24) versehen ist, wobei ein Ende ferner auf beiden Seiten mit einem Sperrstift (26; 27) versehen ist, der geeignet ist, mit einer Sperrplatte (28; 29) zusammenzuwirken, welche mit einem schwenkbaren Zwischenelement (7; 8) verbunden ist.

13. Maschine nach Anspruch 12,
**dadurch gekennzeichnet, daß** die Sperrplatten (28, 29) und die Sperrstifte (26, 27) derart ausgebildet sind, daß jede Sperrplatte (28; 29) den entsprechenden Sperrstift (26; 27) und damit die Sperrstange (22) blockiert, es sei denn, die Gutbearbeitungsglieder (2; 3) wären vollständig hochgeschwenkt, in welchem Fall die Sperrstifte (26; 27) mit Hilfe der Sperrstange (22) gegen die Kraft einer Feder an den Sperrplatten (28; 29) entlang oder durch sie hindurch bewegbar sind, so daß die Gutbearbeitungsglieder (2; 3) in ihre Transportlage gelangen.

14. Maschine nach Anspruch 13,
**dadurch gekennzeichnet, daß** die Sperrplatten (28, 29) und die Sperrstifte (26, 27) derart ausgebildet sind, daß in der Transportlage der Gutbearbeitungsglieder (2, 3) jeder Sperrstift (26; 27) die entsprechende Sperrplatte (28; 29) blockiert, so daß die Zwischenelemente (7, 8) und mit ihnen die Gutbearbeitungsglieder (2, 3) nicht nach unten schwenken können.

15. Maschine nach Anspruch 10,
**dadurch gekennzeichnet, daß** die Sperrvorrichtungen (22 bis 34) derart ausgebildet sind, daß der Schieber (12) von einer ersten Endposition, die der Arbeitslage entspricht, in der der Abstand der Rechkörper (2, 3) zur Mittelachse am größten ist, nicht weiter als bis in eine Zwischenposition bewegbar ist, die der Arbeitslage entspricht, in der der Abstand der Rechkörper (2, 3) zur Mittelachse am kleinsten ist, es sei denn, die Rechkörper (2, 3) wären um einen bestimmten Winkel α hochgeschwenkt, in welchem Falle der Schieber (12) ferner in eine zweite Endposition bewegbar ist, die nach dem vollständigen Hochschwenken der Rechkörper (2, 3) der Transportposition der Rechkörper (2, 3) entspricht.

16. Maschine nach Anspruch 15,
**dadurch gekennzeichnet, daß** die Sperrvorrichtungen (22 bis 34) ferner derart ausgebildet sind, daß die Gutbearbeitungsglieder (2, 3) aus einer Arbeitslage nur über den Winkel a nach oben geschwenkt werden können, wonach der Schieber (12) in die zweite Endposition bewegt werden kann, worauf die Gutbearbeitungsglieder (2, 3) vollständig hochgeschwenkt werden können.

17. Maschine nach Anspruch 16,
**dadurch gekennzeichnet, daß** die Sperrvorrichtungen (22 bis 34) ferner derart ausgebildet sind, daß die vollständig hochgeschwenkten Gutbearbeitungsglieder (2, 3) nicht in seitlicher Richtung nach unten schwenken können.

## Revendications

1. Machine de fenaison munie, de chaque côté d'un élément de liaison (1), qui peut être fixé à un tracteur, d'un élément destiné à travailler les récoltes (2, 3) qui peut être dirigé et qui peut tourner autour d'un axe essentiellement dirigé vers le haut et dont la distance jusqu'à un axe central s'étendant dans le sens de déplacement du tracteur est ajustable entre une première position de fonctionnement dans laquelle la distance de l'élément destiné à travailler les récoltes à l'axe central est maximale et une position de fonctionnement intermédiaire dans laquelle la distance de l'élément destiné à travailler les récoltes à l'axe central est minimale, ledit élément destiné à travailler les récoltes (2, 3) étant fixé de manière rotative à l'élément de liaison (1) de façon à pouvoir être pivoté vers le haut depuis la position de fonctionnement intermédiaire à des fins de transport et *vice versa,* **caractérisée en ce que** des moyens (7 à 16, 20 à 34) sont fournis pour faire en sorte que les éléments destinés à travailler les récoltes (2, 3), lorsqu'ils se trouvent en position pivotée vers le haut, effectuent un mouvement ayant une composante dirigée vers l'élément de liaison (1) pour déplacer les éléments destinés à travailler les récoltes (2, 3) vers le bas par rapport à l'élément de liaison (1) dans une position de transport dans laquelle ils prennent une position inférieure à la position pivotée vers le haut depuis la position de fonctionnement intermédiaire.

2. Machine selon la revendication 1, **caractérisée en ce que** la machine est équipée de moyens de blocage (26 à 29, 3 1 à 34) assurant que les éléments destinés à travailler les récoltes (2, 3) ne puissent pas être pivotés vers le bas directement à partir de la position de transport.

3. Machine selon l'une quelconque des revendications 1 ou 2, **caractérisée en ce que** l'élément de liaison (1) est conçu comme un bras (4) s'étendant dans le sens de déplacement, ledit bras (4) étant muni des deux côtés d'un élément intermédiaire (7 ; 8), fixé de manière articulée, qui peut être pivoté grâce à un cylindre de commande (9 ; 10) et auquel est fixé l'élément destiné à travailler les récoltes (2; 3)

4. Machine selon l'une quelconque des revendications 1 à 3, **caractérisée en ce que** l'élément de liaison (1) est équipé de roues (5, 6).

5. Machine selon l'une quelconque des revendications 3 et 4, **caractérisée en ce que** la machine est équipée d'un dispositif de coulissement (12) qui peut être déplacé le long du bras (4) grâce à un cylindre de commande (11) et qui est relié aux éléments destinés à travailler les récoltes (2, 3).

6. Machine selon l'une quelconque des revendications 3 à 5, **caractérisée en ce que** l'élément intermédiaire (7; 8) est relié à l'élément destiné à travailler les récoltes correspondant (2; 3) par l'intermédiaire d'au moins une barre (13; 15) qui est fixée à une extrémité de manière articulée autour d'un axe qui est essentiellement vertical dans la position d e fonctionnement, à l'élément intermédiaire (7; 8).

7. Machine selon la revendication 6, **caractérisée en ce que** le dispositif de coulissement (12) est relié à chacun des éléments destinés à travailler les récoltes (2, 3) par l'intermédiaire de barres (20, 21) qui sont chacune fixées à une extrémité de manière articulée autour d'un axe essentiellement horizontal et autour d'un axe qui est essentiellement vertical dans la position de fonctionnement, au dispositif de coulissement (12), et à leur autre extrémité de manière articulée autour d'un axe qui est essentiellement vertical dans la position de fonctionnement, à la barre correspondante (13, 15) de l'élément intermédiaire (7, 8).

8. Machine selon l'une quelconque des revendications 3 à 7, **caractérisée en ce que** l'élément intermédiaire (7, 8) est relié à l'élément destiné à travailler les récoltes correspondant (2 ; 3) par l'intermédiaire d'une construction en parallélogramme ayant deux barres parallèles (13, 14 ; 15, 16) de telle manière que l'orientation de l'élément destiné à travailler les récoltes (2 ; 3) dans le sens de déplacement soit la même dans n'importe quelle position.

9. Machine selon l'une quelconque des revendications 1 à 8, **caractérisée en ce que** chaque élément destiné à travailler les récoltes (2 ; 3) est muni d'une construction avec roues en tandem (17 ; 18).

10. Machine selon l'une quelconque des revendications 5 à 9, **caractérisée en ce que** l'élément de liaison (1) et le dispositif de coulissement (12) sont munis de moyens formant butée (22 à 34) pour limiter leur mouvement relatif mutuel.

11. Machine selon la revendication 10, **caractérisée en ce que** les moyens formant butée (22 à 29) sont conçus de telle manière que le dispositif de coulissement (12), depuis une première position d'extrémité correspondant à cette position de fonctionnement dans laquelle la distance entre les éléments destinés à travailler les récoltes (2, 3) et l'axe central est maximale, ne puisse pas se déplacer davantage que dans une position intermédiaire correspondant à cette position de fonctionnement dans laquelle la distance entre les éléments destinés à travailler les récoltes (2, 3) et l'axe central est minimale, sauf si les éléments destinés à travailler les récoltes (2, 3) ont été complètement pivotés vers le haut, auquel cas le dispositif de coulissement (12) est davantage déplaçable dans une seconde position d'extrémité correspondant à la position de transport des éléments destinés à travailler les récoltes (2, 3).

12. Machine selon la revendication 11, **caractérisée en ce que** les moyens formant butée (22 à 29) comprennent une barre de butée (22), dont une extrémité est reliée au bras (4) par l'intermédiaire d'une construction à ressort (23) et dont l'autre extrémité est introduite dans une bague (24) sur le dispositif de coulissement (12) et est munie d'une butée (25) pour ladite bague (24), tandis qu'une extrémité est également munie des deux côtés d'une goupille de butée (26 ; 27) qui est adaptée pour coopérer avec une plaque de butée (28 ; 29) qui est reliée à un élément intermédiaire pouvant pivoter (7 ; 8).

13. Machine selon la revendication 12, **caractérisée en ce que** les plaques de butée (28, 29) et les goupilles de butée (26, 27) sont conçues de telle manière que chaque plaque de butée (28; 29) bloque la goupille de butée (26 ; 27) correspondante ainsi que la barre de butée (22), sauf si les éléments destinés à travailler les récoltes (2; 3) ont été pivotés vers le haut complètement, auquel cas les goupilles de butée (26 ; 27) peuvent être déplacées à l'aide de la barre de butée (22) contre l'action du ressort le long de ou à travers les plaques de butée (28 ; 29) de telle manière que les éléments destinés à travailler les récoltes (2 ; 3) atteignent leur position de transport.

14. Machine selon la revendication 13, **caractérisée en ce que** les plaques de butée (28, 29) et les goupilles de butée (26, 27) sont conçues de telle manière que, dans la position de transport des éléments destinés à travailler les récoltes (2, 3), chaque goupille de butée (26 ; 27) bloque la plaque de butée correspondante (28 ; 29) de telle manière que les éléments intermédiaires (7, 8) ainsi que les éléments destinés à travailler les récoltes (2, 3) ne puissent pas pivoter vers le bas.

15. Machine selon la revendication 10, **caractérisée en ce que** les moyens formant butée (22 à 34) sont conçus de telle manière que le dispositif de coulissement (12), depuis une première position d'extrémité correspondant à cette position de fonctionnement dans laquelle la distance entre les éléments formant râteau (2, 3) et l'axe central est maximale, ne puisse pas se déplacer davantage que dans une position intermédiaire correspondant à la position de fonctionnement dans laquelle la distance entre les éléments formant râteau (2, 3) et l'axe central est minimale, sauf si les éléments formant râteau (2, 3) ont été pivotés vers le haut selon un angle donné α, auquel cas le dispositif de coulissement (12) est davantage déplaçable dans une seconde position d'extrémité, qui correspond, une fois que les éléments formant râteau (2, 3) ont encore été pivotés complètement vers le haut, à la position de transport des éléments formant râteau (2, 3).

16. Machine selon la revendication 15, **caractérisée en ce que** les moyens formant butée (22 à 34) sont également conçus de telle manière que les éléments destinés à travailler les récoltes (2, 3) ne puissent pas être pivotés vers le haut depuis une position de fonctionnement plus que sur l'angle a, après quoi le dispositif de coulissement (12) peut être déplacé dans la seconde position d'extrémité, après quoi les éléments destinés à travailler les récoltes (2, 3) peuvent être pivotés complètement vers le haut.

17. Machine selon la revendication 16, **caractérisée en ce que** les moyens formant butée (22 à 34) sont également conçus de telle manière que les éléments destinés à travailler les récoltes (2, 3) complètement pivotés vers le haut ne puissent pas pivoter vers le bas de manière latérale.
